# EUROPÄISCHE PATENTANMELDUNG

(11) **EP 4 799 836 A1**
(43) Veröffentlichungstag der Anmeldung: **02.09.2026**
(21) Anmeldenummer: 26160104.1
(22) Anmeldetag: 23.02.2026
(51) Int. Cl.: B60J 10/79, B60J 5/04

(54) **FENSTERFÜHRUNG UND LÄNGSFÜHRUNG**

(30) Priorität: 26.02.2025 DE 102025107236
(71) Anmelder: CQLT SaarGummi Technologies S.à.r.l., 5544 Remich (LU)
(72) Erfinder: Grüter, Achim, 66780 Rehlingen-Siersburg (DE); Thiel, Daniel, 66701 Beckingen-Oppen (DE); Laux, Timo, 66809 Nalbach (DE)
(74) Vertreter: Patentanwälte Bernhardt / Wolff Partnerschaft mbB

(57) **Zusammenfassung**

Die Erfindung betrifft eine Fensterführung (1), insbesondere zur Führung einer versenkbaren Fensterscheibe (2) eines Kraftfahrzeugs, umfassend einen an einer Fensterscheibe (2) befestigbaren Gleitstein (3) und eine an einem Fensterrahmen (8) befestigbare Längsführung (5) für den Gleitstein (3). Um eine optisch ansprechende Erscheinungsform zu ermöglichen, weist die Längsführung (5) im Querschnitt ein freies Ende (10) auf, auf welches eine Fensterdichtung (11) aufgesteckt ist, wobei das freie Ende (10) in Richtung der Fensterscheibe (2) gerichtet ist oder in Richtung des Gleitsteins (3) zurückversetzt ist.

## Beschreibung

Die Erfindung betrifft eine Fensterführung zur Führung einer versenkbaren Fensterscheibe eines Kraftfahrzeugs nach dem Oberbegriff des Anspruchs 1 sowie eine Längsführung für eine Fensterführung.

Durch Benutzung sind Fensterführungen zur Führung einer versenkbaren Fensterscheibe eines Kraftfahrzeugs bekannt, welche einen an einer Fensterscheibe befestigbaren Gleitstein und eine an einem Fensterrahmen befestigbare Längsführung für den Gleitstein umfassen. Eine derartige Fensterführung gewährleistet, dass die versenkbare Fensterscheibe in jeder Position von der Fensterführung sicher gehalten wird.

Aufgabe der Erfindung ist es, eine Fensterführung zu schaffen, welche eine optisch ansprechende Erscheinungsform ermöglicht.

Diese Aufgabe wird dadurch gelöst, dass die Längsführung im Querschnitt ein freies Ende aufweist, auf welches eine Fensterdichtung aufgesteckt ist, wobei das freie Ende in Richtung der Fensterscheibe gerichtet ist oder in Richtung des Gleitsteins zurückversetzt ist. Hierdurch wird ermöglicht, die Fensterführung besonders schmal auszubilden, so dass die Fensterfläche gegenüber dem Fensterrahmen verhältnismäßig größer ausgebildet werden kann und die Sichtwinkelbeeinträchtigung durch den Fensterrahmen reduziert wird.

Vorteilhaft kann die Längsführung durch ein metallverstärktes Profil gebildet werden, welches besonders bevorzugt ein rollgeformtes oder streckgebogenes Metallblech umfasst. An dem metallverstärkten Profil können weitere Komponenten vorgesehen sein, beispielsweise können Dichtlippen aus einem Kunststoff wie EPDM oder TPE sowie eine Gleitbeschichtung zur Führung des Gleitsteins am metallverstärkten Profil vorgesehen sein.

In weiter vorteilhafter Ausführungsform kann die Längsführung einen Befestigungsabschnitt zur Befestigung der Längsführung an einer Fahrzeugtür und einen Führungsabschnitt zur Führung des Gleitsteins umfassen. Das metallverstärkte Profil erstreckt sich dabei vorteilhaft von dem Befestigungsabschnitt bis zu dem Führungsabschnitt, wobei es im Führungsabschnitt den Gleitstein teilweise umschließt und im Befestigungsabschnitt das freie Ende zur Halterung der Fensterdichtung bildet. Hierdurch wird eine besonders stabile und einfach zu montierende Fensterführung ermöglicht.

In einer ersten alternativen Ausführungsform kann das freie Ende des Befestigungsabschnitts rechtwinklig zur Fensterscheibe orientiert sein. Bei einer derartigen Ausgestaltung wird die Fensterdichtung von der Seite der Fensterscheibe aufgesteckt und ein Lösen der Fensterdichtung wird durch die Fensterscheibe zuverlässig verhindert.

In einer zweiten alternativen Ausgestaltung kann das freie Ende des Befestigungsabschnitts einen S-förmigen Verlauf mit einem von dem Gleitstein weg zeigenden Ende aufweisen. Durch eine derartige S-Form des freien Endes wird die Breite der Fensterführung ebenfalls deutlich reduziert. Die Fensterdichtung kann hierbei seitlich parallel zur Ebene der Fensterscheibe auf das freie Ende aufgesteckt werden.

Vorteilhaft ist in dem Befestigungsabschnitt mindestens ein Befestigungselement, insbesondere eine Schraube oder ein Spreizniet, vorgesehen, um die Längsführung an einer Fahrzeugtür zu befestigen. In dem Bereich des Befestigungselementes kann der Befestigungsabschnitt eben ausgebildet sein, wobei sich hieran wie zuvor beschrieben das rechtwinklig zur Fensterscheibe angewinkelte oder in S-Form ausgebildete freie Ende des metallverstärkten Profils anschließt.

Besonders vorteilhaft kann das freie Ende des Befestigungsabschnitts zumindest abschnittsweise derart in Richtung des Gleitsteins zurückversetzt sein, dass im Querschnitt das freie Ende bzw. dessen Verlängerung in Längsrichtung der Längsführung das Befestigungselement zumindest teilweise verdeckt. Anders ausgedrückt kann ein Teil des S-förmigen freien Endes bzw. dessen Verlängerung in Längsrichtung der Längsführung zwischen dem Befestigungselement und der Fensterscheibe angeordnet sein, wenn im Querschnitt die kürzeste Verbindungslinie zwischen dem Befestigungselement und der Fensterscheibe herangezogen wird.

Um ein Eindringen von Schmutz in den Befestigungsabschnitt zu verhindern und zudem den Befestigungsabschnitt optisch abzudecken, kann sich eine Abdecklippe der Fensterdichtung über den Befestigungsabschnitt hinweg bis zu dem Führungsabschnitt, insbesondere bis zu einer Dichtlippe des Führungsabschnitts, erstrecken und vorzugsweise dort dichtend anliegen.

Um eine einfache Montage durch das mindestens eine Befestigungselement zu ermöglichen, kann in dem freien Ende der Längsführung, insbesondere in dem S-förmigen Verlauf, mindestens eine Aussparung für die Montage des Befestigungselement vorgesehen sein. Bei der Aussparung kann es sich beispielsweise um eine Ausfräsung oder Ausstanzung in dem metallverstärkten Profil handeln, welches eine geradlinige Montage des Befestigungselements ermöglicht.

Des Weiteren wird auch eine Längsführung für eine Fensterführung, insbesondere für eine Fensterführung zur Führung einer versenkbaren Fensterscheibe eines Kraftfahrzeugs, beansprucht, welche einen Befestigungsabschnitt zur Befestigung der Längsführung an einer Fahrzeugtür und einen Führungsabschnitt zur Führung eines Gleitsteins umfasst. Erfindungsgemäß weist der Befestigungsabschnitt ein freies Ende auf, welches gegenüber dem übrigen Befestigungsabschnitt angewinkelt oder zurückversetzt ist.

Weitere Besonderheiten und Vorzüge der Erfindung ergeben sich aus der folgenden Beschreibung bevorzugter Ausführungsbeispiele anhand der Zeichnungen. Es zeigen:
- Fig. 1: einen Querschnitt durch eine erste Ausführungsform einer Fensterführung mit einer Längsführung, deren freies Ende angewinkelt ist, und
- Fig. 2: einen Querschnitt durch eine zweite Ausführungsform einer Fensterführung mit einer Längsführung, deren freies Ende S-förmig ausgebildet ist.

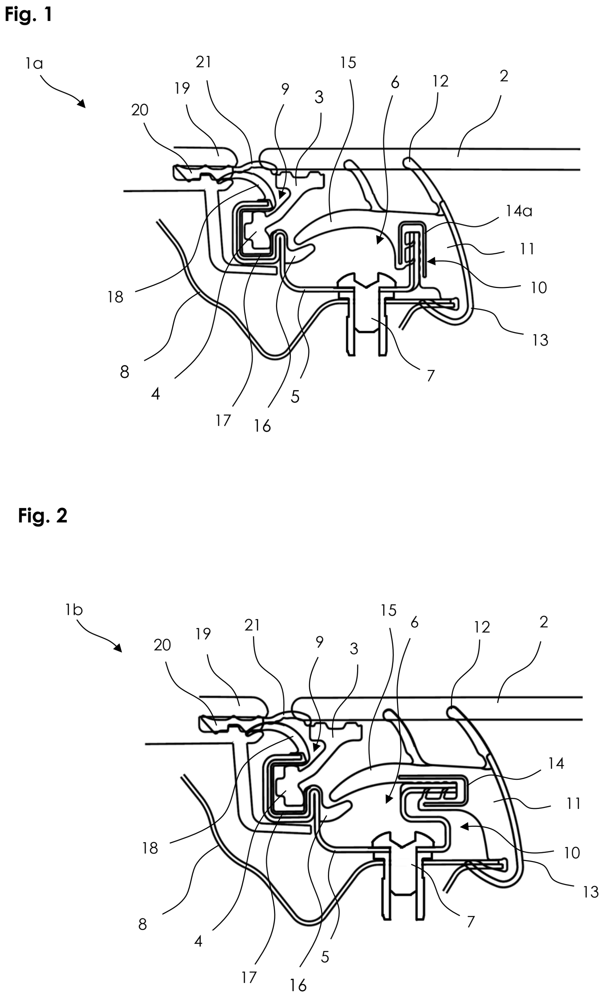

In Figur 1 ist ein Querschnitt durch eine erste Ausführungsform einer Fensterführung 1a zur Führung einer versenkbaren Fensterscheibe 2 eines Kraftfahrzeugs gezeigt. Die Fensterführung 1a umfasst einen Gleitstein 3, welcher an einem Randbereich der Fensterscheibe 2 auf der Innenseite beispielsweise durch Verkleben befestigt ist. Der Gleitstein 3 weist an einem freien Ende einen Kopf 4 auf, welcher mehrere Anlageflächen in verschiedenen Raumrichtungen umfasst. Zur Führung des Gleitsteins 3 ist eine Längsführung 5 vorgesehen, welche als rollgeformtes Metallprofil ausgebildet ist und in einem Befestigungsabschnitt 6 über ein Befestigungselement 7 in Form einer Spreizniet mit einem Fensterrahmenblech 8 eines Fensterrahmens einer Fahrzeugtür fest verbunden ist. Des Weiteren umfasst die Längsführung 5 auch einen Führungsabschnitt 9, welcher sich an den Befestigungsabschnitt 6 anschließt und den Kopf 4 des Gleitsteins 3 teilweise umschließt. Durch die Führung des Kopfs 4 des Gleitsteins 3 in dem Führungsabschnitt 9 wird eine zuverlässige Positionierung der versenkbaren Fensterscheibe 2 gegenüber dem Fensterrahmenblech 8 und den weiteren Komponenten erreicht.

Der Befestigungsabschnitt 6 der Längsführung 5 umfasst im Querschnitt zudem ein freies Ende 10, auf welches eine Fensterdichtung 11 aufgesteckt ist. Bei der in Figur 1 gezeigten Ausführungsform ist dieses freie Ende 10 in Richtung der Fensterscheibe 2 gerichtet und rechtwinklig hierzu ausgebildet. Die Montage der Fensterdichtung 11 erfolgt dabei aus Richtung der versenkbaren Fensterscheibe 2, wobei die versenkbare Fensterscheibe 2 in diesem Montageschritt noch nicht vorhanden ist. Wenn später die versenkbare Fensterscheibe 2 montiert wird, wird hierdurch auch die Fensterdichtung 11 zuverlässig gehalten und ein Abrutschen der Fensterdichtung 11 wird verhindert.

Die Fensterdichtung 11 umfasst auf ihrer der Fensterscheibe 2 zugewandten Seite mehrere Dichtlippen, von welchen hier exemplarisch die Dichtlippe 12 beziffert ist. Die Dichtlippe 12 dient der Abdichtung des Spalts zwischen der Fensterdichtung 11 und der versenkbaren Fensterscheibe 2. An einer zum Innenraum eines Kraftfahrzeugs zeigenden Seite der Fensterdichtung 11 ist zudem ein Zierelement 13 beispielsweise in Form einer Beschichtung oder einer Anspritzung vorgesehen, welche die optische Erscheinungsform der Fensterdichtung 11 gegenüber dem Innenraum eines Kraftfahrzeugs verbessert. Um die Halterung der Fensterdichtung 11 an dem freien Ende 10 zu verbessern, ist in der Fensterdichtung 11 ein Verstärkungselement 14 vorgesehen, welches als metallisches Verstärkungselement mit U- förmigem Querschnitt ausgebildet ist. Zusätzlich ist an der Fensterdichtung 11 auch eine Abdecklippe 15 vorgesehen, welche sich über den Befestigungsabschnitt 6 hinweg bis zu dem Führungsabschnitt 9 erstreckt und an einer Dichtlippe 16 des Führungsabschnitts 9 dichtend anliegt.

Um die Führung des Kopfs 4 des Gleitsteins 3 in dem Führungsabschnitt 9 möglichst reibungsfrei auszubilden, ist an der Innenseite des den Kopf 4 teilweise umschließenden Führungsabschnitts 9 eine Gleitbeschichtung 17 vorgesehen, welche vorzugsweise stoffschlüssig mit dem metallverstärkten Profil der Längsführung 5 verbunden ist. Zusätzlich ist an dem freien Ende des Führungsabschnitts 9 eine weitere Dichtlippe 18 vorgesehen, welche dichtend an einer Blende 19 anliegt. Die Blende 19 ist mit ihrer Außenseite fluchtend zu der versenkbaren Fensterscheibe 2 angeordnet und es ist in einer Ausnehmung in der Blende 19 eine Spaltdichtung 20 angeordnet, welche eine an dem äußeren Rand der Fensterscheibe 2 anliegende Dichtlippe 21 aufweist.

In Figur 2 ist ein Querschnitt durch eine zweite Ausführungsform einer Fensterführung 1b gezeigt, wobei die im Wesentlichen identischen Komponenten mit den gleichen Bezugszeichen wie bei der in Figur 1 gezeigten Ausführungsform versehen sind. Wie sich aus dem Vergleich mit der in Figur 1 gezeigten Ausführungsform ergibt, unterscheidet sich die in Figur 2 gezeigte Ausführungsform lediglich dadurch, dass das freie Ende 10 des Befestigungsabschnitts einen S-förmigem Verlauf mit einem von dem Gleitstein 3 weg zeigenden Ende aufweist. Das freie Ende 10 des Befestigungsabschnitts 6 ist dabei zumindest abschnittsweise derart in Richtung des Gleitsteins 3 zurückversetzt, dass in dem gezeigten Querschnitt das freie Ende bzw. dessen Verlängerung in Längsrichtung der Längsführung das Befestigungselement 7 zumindest teilweise verdeckt. Anders gesagt, ist ein Teil des freien Endes 10 des Befestigungsabschnitt 6 wie in Figur 2 gezeigt oberhalb des Befestigungselements 7 angeordnet und verdeckt dies hierdurch zumindest teilweise. Um dennoch eine einfache Montage des Befestigungselements 7 zu ermöglichen, kann in dem freien Ende 10, insbesondere in dem S-förmigem Verlauf, eine hier nicht dargestellte Aussparung vorgesehen sein, welche eine geradlinige Montage des Befestigungselement 7 rechtwinklig zur Ebene der Fensterscheibe 2 ermöglicht.

### Bezugszeichenliste:

- 1a, 1b: Fensterführung
- 2: Fensterscheibe
- 3: Gleitstein
- 4: Kopf des Gleitsteins
- 5: Längsführung
- 6: Befestigungsabschnitt
- 7: Befestigungselement
- 8: Fensterrahmenblech
- 9: Führungsabschnitt
- 10: Freies Ende des Befestigungsabschnitts
- 11: Fensterdichtung
- 12: Dichtlippe der Fensterdichtung
- 13: Zierelement
- 14b: Verstärkungselement
- 15: Abdecklippe
- 16: Dichtlippe des Führungsabschnitts
- 17: Gleitbeschichtung
- 18: Weitere Dichtlippe des Führungsabschnitts
- 19: Blende
- 20: Spaltdichtung
- 21: Dichtlippe der Spaltdichtung

## Patentansprüche

1. Fensterführung (1a; 1b), insbesondere zur Führung einer versenkbaren Fensterscheibe (2) eines Kraftfahrzeugs, umfassend einen an einer Fensterscheibe (2) befestigbaren Gleitstein (3) und eine an einem Fensterrahmen (8) befestigbare Längsführung (5) für den Gleitstein (3),
**dadurch gekennzeichnet,**
**dass** die Längsführung (5) im Querschnitt ein freies Ende (10) aufweist, auf welches eine Fensterdichtung (11) aufgesteckt ist, wobei das freie Ende (10) in Richtung der Fensterscheibe (2) gerichtet ist oder in Richtung des Gleitsteins (3) zurückversetzt ist.

2. Fensterführung (1a; 1b) nach Anspruch 1,
**dadurch gekennzeichnet,**
**dass** die Längsführung (5) durch ein metallverstärktes Profil gebildet wird und insbesondere ein rollgeformtes oder streckgebogenes Metallblech umfasst.

3. Fensterführung (1a; 1b) nach einem der vorhergehenden Ansprüche,
**dadurch gekennzeichnet,**
**dass** die Längsführung (5) einen Befestigungsabschnitt (6) zur Befestigung der Längsführung (5) an einer Fahrzeugtür (8) und einen Führungsabschnitt (9) zur Führung des Gleitsteins (3) umfasst.

4. Fensterführung (1a; 1b) nach Anspruch 3,
**dadurch gekennzeichnet,**
**dass** sich das metallverstärkte Profil von dem Befestigungsabschnitt (6) bis zu dem Führungsabschnitt (9) erstreckt, wobei das metallverstärkte Profil im Führungsabschnitt (9) den Gleitstein (3) teilweise umschließt und im Befestigungsabschnitt (6) das freie Ende (10) zur Halterung der Fensterdichtung (11) bildet.

5. Fensterführung (1a) nach Anspruch 4,
**dadurch gekennzeichnet,**
**dass** das freie Ende (10) des Befestigungsabschnitts (6) rechtwinklig zur Fensterscheibe (2) orientiert ist.

6. Fensterführung (1b) nach Anspruch 4,
dass das freie Ende (10) des Befestigungsabschnitts (6) einen S-förmigen Verlauf mit einem vom dem Gleitstein (3) weg zeigenden Ende aufweist.

7. Fensterführung (1a; 1b) nach einem der Ansprüche 3 bis 6,
**dadurch gekennzeichnet,**
**dass** in dem Befestigungsabschnitt (6) mindestens ein Befestigungselement (7), insbesondere eine Schraube oder ein Spreizniet, vorgesehen ist, um die Längsführung (5) an einer Fahrzeugtür (8) zu befestigen.

8. Fensterführung (1b) nach Anspruch 7,
**dadurch gekennzeichnet,**
**dass** das freie Ende (10) des Befestigungsabschnitts (6) zumindest abschnittsweise derart in Richtung des Gleitsteins (3) zurückversetzt ist, dass im Querschnitt das freie Ende (10) bzw. dessen Verlängerung in Längsrichtung der Längsführung (5) das Befestigungselement (7) zumindest teilweise verdeckt.

9. Fensterführung (1a; 1b) nach einem der Ansprüche 3 bis 8,
**dadurch gekennzeichnet,**
**dass** eine Abdecklippe (15) der Fensterdichtung (11) sich über den Befestigungsabschnitt (6) hinweg bis zu dem Führungsabschnitt (9), insbesondere einer Dichtlippe (16) des Führungsabschnitts (9), erstreckt.

10. Fensterführung (1b) nach einem der vorhergehenden Ansprüche,
**dadurch gekennzeichnet,**
**dass** in dem freien Ende (10) der Längsführung (5), insbesondere in dem S-förmigen Verlauf, mindestens eine Aussparung für die Montage des Befestigungselements (7) vorgesehen ist.

11. Längsführung (5) für eine Fensterführung (1a; 1b), insbesondere eine Fensterführung zur Führung einer versenkbaren Fensterscheibe (2) eines Kraftfahrzeugs, umfassend einen Befestigungsabschnitt (6) zur Befestigung der Längsführung (5) an einer Fahrzeugtür (8) und einen Führungsabschnitt (9) zur Führung eines Gleitsteins (3),
**dadurch gekennzeichnet,**
**dass** der Befestigungsabschnitt (6) ein freies Ende (10) aufweist, welches gegenüber dem übrigen Befestigungsabschnitt (6) angewinkelt oder zurückversetzt ist.
